# EUROPEAN PATENT SPECIFICATION

(11) **EP 2 918 568 B1**
(45) Date of publication and mention of the grant of the patent: **17.08.2016**
(21) Application number: 14000964.8
(22) Date of filing: 14.03.2014
(51) Int. Cl.: C04B 35/457, C04B 35/632, C04B 35/634, C04B 35/636, C02F 1/46, C02F 1/461, C25B 11/04, C23F 13/12, C23F 13/16, C25B 1/26

(54) **Ceramic compositions and method of manufacture of ceramic electrodes comprising said compositions**
Keramische Zusammensetzungen und Verfahren zur Herstellung von keramischen Elektroden mit solchen Zusammensetzungen
Compositions céramiques et procédé de fabrication d'électrodes en céramique comprenant lesdites compositions

(43) Date of publication of application: 16.09.2015
(73) Proprietor: Sociedad Anónima Minera Catalano-Aragonesa, 50001 Zaragoza (ES)
(72) Inventor: Caballero López, Miguel Angel, 50001 Zaragoza (ES); Ferrando Molinos, Fidel, 50001 Zaragoza (ES); Ejarque Esteve, Sara, 50001 Zaragoza (ES); Lorente Ayza, Magdalena, 12006 Castellón (ES); Sanchez Vilches, Enrique, 12006 Castellón (ES)
(74) Representative: Schäfer, Matthias W.

(56) References cited:
- EP-A1- 0 443 229
- US-A1- 2006 016 223
- DATABASE WPI Week 198107 Thomson Scientific, London, GB; AN 1981-11260D XP002725857, -& SU 740 727 A1 (GUSEV GLASS RES) 15 June 1980 (1980-06-15)
- DATABASE WPI Week 198016 Thomson Scientific, London, GB; AN 1980-28878C XP002725858, -& SU 681 020 A (GUSEV GLASS RES INST) 25 August 1979 (1979-08-25)
- DATABASE WPI Week 201417 Thomson Scientific, London, GB; AN 2014-E04794 XP002725859, -& CN 103 482 983 A (UNIV NANJING SCI & TECHNOLOGY) 1 January 2014 (2014-01-01)
- DATABASE WPI Week 201339 Thomson Scientific, London, GB; AN 2013-G01344 XP002725860, -& CN 102 875 142 A (ZIBO GT IND CERAMICS CO LTD) 16 January 2013 (2013-01-16)

## Description

This description refers, as its title indicates, to ceramic compositions containing a high percentage of tin oxide SnO₂ along with some ingredients to improve sintering or electrical conductivity and organic additives to improve plasticity. It also refers to ceramic electrodes with high electrical conductivity that are manufactured with said compositions as well as the specific process for manufacturing them that comprises, forming by extrusion and/or pressing, drying, sintering, thermal treatment and machining.

### Field of the invention

The present invention refers to a new type of ceramic compositions in which tin oxide and oxides that improve sintering or electrical conductivity are included and to ceramic electrodes for a preferred use in water treatment and purification applications, obtained from said compositions. It also refers to the process of manufacturing said ceramic electrodes.

### The Prior Art

Over the past few decades, ceramics based on tin oxide (SnO₂) have been studied and developed for their use in numerous fields of application, such as electronics, electrotechnical applications, electro-chemical applications, catalysis, biotechnology, nuclear technology, chemical technologies, metallurgy, etc.

SnO₂ is an n-type semiconductor with a wide bandgap (3.6 eV) that has interesting properties depending on the microstructural characteristics of the material. On the one hand, the highly porous tin oxide polycrystals have structural defects that make them suitable for use as catalysts (for example, in organic synthesis) and as semiconductor gas sensors. On the other hand. dense SnO₂ ceramics, due to their semi-conductor properties, have certain structural applications, such as high-temperature electrodes for various uses, such as aluminium electrolysis and the glass industry.

Due to the wide variety of possible applications, a strict control of properties is necessary, and said control is possible given the relationship that exists between composition, structure and the physical-chemical and mechanical properties required in each case.

### Background of the invention

In the current state of the art there are numerous documents referring to the design of ceramic compositions for the manufacture of highly diverse ceramic products, among which are ceramic electrodes. In some of these proposals, such as for example that described in Patent CN102875142, the aim, as in the present invention, is to obtain ceramic electrodes based on tin oxide, although the composition and forming method differ totally, since forming is carried out by isostatic pressing.

Other implementations are also known in which the electrodes have different configurations, such as, for example, a layer covering a ceramic base as described in KR20070103138 or in CN102701333, or a structure in the form of a core, as advocated in GB1433075 or US4897853.

Most of the implementations of electrodes currently used are formed by titanium oxide on cementitious substrates, as claimed in EP0438839, EP0186334 or EP0443229.

There are also proposals that employ the extrusion method to form the electrodes, however most of these are based on titanium oxide electrodes, as can be found in JPS5569282 or in EP0047595. Only the latter cites a coating layer that can be tin oxide, but which has to be pre-calcinated at high temperatures prior to its use. Finally, in none of the aforementioned inventions is the electrical conductivity of the electrode increased by means of a thermal treatment stage in a reducing atmosphere after sintering.

An analysis of scientific-technical literature reveals that none of the proposals reviewed are intended to manufacture ceramic electrodes based on tin oxide by extrusion and/or uniaxial pressing that is the main object of the present invention. Furthermore, none of them perform a rotary drying process to improve the final finish and thermal treatment of the sintered electrodes in a reducing atmosphere for the purpose of achieving electrodes with higher electrical conductivity.

### Description of the invention

To resolve the problems that currently exist in the manufacture of electrodes, especially for water treatment, the ceramic compositions, as defined in claim 1, and electrodes obtained from said ceramic compositions that are the object of the present invention have been devised, containing a high percentage of tin oxide, between 85 and 99 % by weight, along with ingredients to improve sintering, i.e. copper oxide and zinc oxide, and to improve electrical conductivity, i.e. antimony oxide, and organic additives to improve plasticity.

It also refers to ceramic electrodes with high electrical conductivity made with these compositions, as well as to the procedure for manufacturing them, which comprises the following stages: forming by extrusion and/or pressing, drying, sintering in an air atmosphere, following by a thermal treatment at a lower temperature in a reducing atmosphere, and, finally, the machining of electrodes, which may be in an unfired state (also known as green machining) and/or in a fired state.

The new ceramic compositions of the present invention increase the electrical conductivity of the formed ceramic electrodes, chiefly through the following two lines of action:
- Dry-mixing of the oxides that form the composition and forming by extrusion and/or uniaxial pressing, and/or slow rotary drying.
- Thermal treatment of the electrodes sintered in a reducing atmosphere to increase their electrical conductivity.

This allows to obtain conducting ceramic electrodes that are highly durable and have high conductivity.

### Advantages of the invention

These ceramic compositions and the electrodes obtained from said ceramic compositions that are presented, afford numerous advantages over the electrodes that are currently available, the most important being that there is a considerable improvement in the electrical conductivity of the electrode, resulting in greater effectiveness and less power consumption during its use.

Another of the most important advantages to be highlighted is that it allows a ceramic process to be applied to the manufacture of electrodes, achieving electrodes made of conducting ceramics, which greatly improves the strength and durability of the electrodes, notably reducing their deterioration, especially compared to conventional ones carried out with hardening technology.

Another important advantage is that, due to the combination of high durability, due to the ceramic characteristics, and high conductivity, achieved by using tin oxide, together with the thermal treatment of the sintered electrodes in a reducing atmosphere, these electrodes can be used in new types of water treatments, such as for example, electrolysis applied to water purification, in which at present the only commercially viable treatments are the conventional ones with chlorine.

Another advantage of the present invention is that it permits an optional process of double-firming, which increases and enhances the already high conductivity that is initially obtained in the electrode.

### Description of the figures

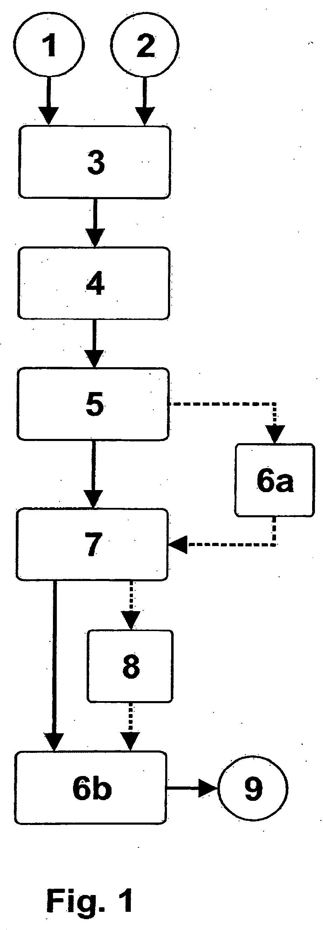

To gain a better understanding of the present invention, figure 1 of the attached drawing shows a simplified diagram of the electrode manufacturing procedure, indicating the main stages that form it.

The ceramic compositions that are the object of the present invention basically comprise:
- Tin oxide in a proportion of between 85% and 99% by weight, preferably between 95% and 99% by weight.
- Antimony oxide in a proportion of between 0.2 and 5% by weight, preferably between 0.2 and 1.2% by weight.
- Copper oxide in a proportion of between 0.1 and 5% by weight, preferably between 0.1 and 1% by weight.
- Zinc oxide in a proportion of between 0.5 and 5% by weight, preferably between 0.5 and 1.5% by weight.
- A deflocculant of the methacrylate family, in a proportion of between 0 and 5% by weight, but preferably between 0.5 and 1.5%
- A plasticizer or mixture of plasticizers, of the cellulose family and/or of acrylic-based polymers.
- A base to adjust the pH of the mixture.

Throughout this description, unless otherwise indicated, the percentages refer to the total weight of the composition.

Likewise the invention refers to the procedure for manufacturing a ceramic electrode (9) that, as can be seen in the attached drawing, comprises the following stages:
- mixing stage (3) of the raw materials (1), together and with water (2),
- forming stage (4) by extrusion and/or pressing, where the pressing, if relevant, is preferably uniaxial, obtaining electrodes of diverse shapes,
- drying stage (5) of the pieces, in a rotary manner or in any other manner,
- sintering stage (7) at temperatures of between 1200 and 1500°C, and
- thermal treatment stage (8) in a reducing atmosphere at temperatures of between 500 and 1100°C, performed after the sintering stage (7).

The electrodes that are obtained may adopt shapes that are, for example, tubular, cylindrical, of any section, or flat plates.

This procedure includes a stage of thermal treatment (8) in a reducing atmosphere at temperatures of between 500 and 1100°C, performed after the sintering stage (7). The reducing atmosphere may comprise carbon monoxide in proportions of between 0 and 40%, and nitrogen in proportions of between 100 and 60%.

It is also envisaged for this procedure to include an optional machining stage (6a,6b) of the electrodes obtained, in order to adjust the measurements of the electrodes to the necessary dimensional tolerances, in the event that, with the measurements obtained directly from extrusion forming (4) and/or uniaxial pressing, they do not comply, and also to provide straightness and flatness, if necessary.

This optional machining stage may be performed in an unfired state (6a), between the drying stage (5) and the sintering stage (7), or in a fired state (6b), as a final stage, after the sintering stage (7) or the thermal treatment stage (8), if applicable. This machining can be performed by any of the commonly known procedures; milling, turning, etc...

The invention also refers to the electrodes (9) obtained with the previously described composition and procedure.

These electrodes (9) thus obtained, have an apparent density greater than 6 g/cm³, a total porosity lower than 10% and electrical resistivity lower than 200 (Ω·cm).

These electrodes have various uses and applications, the most notable being those indicated below:
- Electrochlorination of swimming pool water.
- Cathodic protection of reinforcing bars in reinforced concrete.
- Electro-osmotic protection against damp.
- Food preservation by means of high-intensity pulsed electric fields.
- Waste water treatment and purification.
- Treatment of water for human consumption.

### EXAMPLES

Set out below are some examples of the invention together with the results obtained experimentally.

### EXAMPLE 1

Energetic mixing of the raw materials in the following proportions (molar %):
- 98.4 % tin oxide
- 0.5 % antimony oxide
- 0.2 % copper oxide
- 0.9 % zinc oxide

The raw materials are mixed with water (19% by weight) and with additives to improve plasticity (mix of cellulose and of acrylic-based polymers in a percentage of 1.2% by weight). Furthermore, the pH (slightly alkaline) is adjusted to minimize particle aggregation.

The mixture is homogenised for 24 hours and then forming by extrusion is carried out. Drying is initially carried out at ambient temperature for 24 hours, followed by air-stream drying at 110°C. Finally, tubes with an apparent density of 3.10 g/cm³ are obtained.

Sintering of the tubes is performed at 1350°C for 21 hours in an oxidising atmosphere, obtaining tubes with an apparent density of 6.52 g/cm³ and electrical resistivity of 76 k Ω·cm. The tubes then undergo a thermal treatment in a reducing atmosphere (CO/N₂) at 850°C for 4 hours. After this treatment the electrical resistivity of the tubes is reduced to 50 Ω·cm, with the apparent density remaining unchanged.

### EXAMPLE 2

Energetic mixing of the raw materials in the following proportions (molar %):
- 98.1 % tin oxide
- 0.6 % antimony oxide
- 0.3 % copper oxide
- 1.0 % zinc oxide

The raw materials are mixed with water (21 % by weight) and with additives to improve plasticity (cellulose in a percentage of 1 % by weight). Furthermore, the pH (alkaline) is adjusted to minimize particle aggregation.

The mixture is homogenised for 24 hours and then tubes are formed by extrusion. Drying is carried out by means of rotary drying of the tubes (at a slow speed) at ambient temperature for 24 hours, followed by air-stream drying at 110°C. Finally, tubes with an apparent density of 3.20 g/cm³ are obtained.

Sintering of the tubes is performed at 1350°C for 21 hours in an oxidising atmosphere, obtaining tubes with an apparent density of 6.63 g/cm³ and electrical resistivity of 7 k Ω·cm.

The tubes then undergo a thermal treatment in a reducing atmosphere (CO/N₂) at 850°C for 4 hours. After this treatment the electrical resistivity of the tubes is reduced to 120 Ω·cm, with the apparent density remaining unchanged.

### EXAMPLE 3

Energetic mixing of the raw materials in the following proportions (molar %):
- 98.2 % tin oxide
- 0.6 % antimony oxide
- 0.3 % copper oxide
- 0.9 % zinc oxide

The raw materials are mixed with water (20% by weight) and with additives to improve plasticity (cellulose in a percentage of 1 % by weight).

The mixture is homogenised for 24 hours and then tubes are formed by extrusion. Drying is carried out at ambient temperature for 24 hours, followed by air-stream drying at 110°C. Following this, the tubes are machined in an unfired state to reduce the thickness of the tube and to improve the surface finish. Finally, tubes with an apparent density of 3.23 g/cm³ are obtained.

Sintering of the tubes is performed at 1350°C for 24 hours in an oxidising atmosphere, obtaining tubes with an apparent density of 6.67 g/cm³ and electrical resistivity of 15 k Ω·cm.

Following this, the tubes undergo a thermal treatment in a reducing atmosphere (CO/N₂) at 850°C for 4 hours. After this treatment the electrical resistivity of the tubes is reduced to 80 Ω·cm, with the apparent density remaining unchanged.

## Claims

1. Ceramic composition **characterised in that** it comprises:
- tin oxide in a proportion of between 85% and 99% by weight,
- antimony oxide in a proportion of between 0,2 and 5% by weight,
- copper oxide in a proportion of between 0,1 and 5% by weight,
- zinc oxide in a proportion of between 0,5 and 5% by weight,
- a deflocculant of the methacrylate family, in a proportion of between 0 and 5%,
- a plasticizer or mixture of plasticizers, of the cellulose family and/or of acrylic-based polymers, and
- a base to adjust the pH of the mixture.

2. Ceramic composition, according to claim 1, **wherein** the tin oxide is present in a proportion of between 95% and 99 % by weight.

3. Ceramic composition, according to claim 1, **wherein** the antimony oxide is present in a proportion of between 0.2% and 1.2 % by weight.

4. Ceramic composition, according to claim 1, **wherein** the copper oxide is present in a proportion of between 0.1% and 1 % by weight.

5. Ceramic composition, according to claim 1, **wherein** the zinc oxide is present in a proportion of between 0.5% and 1.5 % by weight.

6. Ceramic composition, according to claim 1, **wherein** the deflocculant is present in a proportion of between 0.5% and 1.5 %.

7. Procedure for manufacturing a ceramic
electrode using a ceramic composition as defined in the preceding claims, **characterised in that** it comprises the following stages:
- mixing stage (3) of the raw materials (1), together and with water (2),
- forming stage (4) by extrusion and/or pressing and pressing and obtaining of electrodes of diverse shapes,
- drying stage (5) of the pieces,
- sintering stage (7) at temperatures of between 1200 and 1500°C and
- thermal treatment stage (8) in a reducing atmosphere at temperatures of between 500 and 1100°C, performed after the sintering stage (7).

8. Procedure for manufacturing a ceramic electrode according to claim 7, **wherein** the pressing carried out in the forming stage (4) is of the uniaxial type.

9. Procedure for manufacturing a ceramic electrode according to claim 7, **characterised in that** the reducing atmosphere in the thermal treatment stage (8) comprises carbon monoxide in proportions of between 0 and 40%, and nitrogen in proportions of between 100 and 60%.

10. Procedure for manufacturing a ceramic electrode according to claim 7, **characterised in that** it comprises a machining stage (6a,6b) of the electrodes obtained.

11. Procedure for manufacturing a ceramic electrode according to claim 10, **wherein** the machining stage (6a) of the electrodes is carried out in an unfired state, between the drying stage (5) and the sintering stage (7).

12. Procedure for manufacturing a ceramic electrode according to claims 7 and 10, **wherein** the machining stage (6b) of the electrodes is carried out in the fired state, as the final stage, after the thermal treatment stage (8).

13. Ceramic electrode manufactured by a process as defined in claims 7 to 12.

14. Use of a ceramic electrode according to
claim 13 for an application selected from the group formed by: electrochlorination of water, cathodic protection of the reinforcing bars in reinforced concrete, electro-osmotic protection against damp, food preservation by means of high-intensity pulsed electrical fields, treatment and purification of waste water or of water intended for human consumption.

## Patentansprüche

1. Keramische Zusammensetzung, **dadurch gekennzeichnet, dass** sie Folgendes aufweist:
- Zinnoxid in einem Verhältnis von zwischen 85 und 99 Gewichtsprozent,
- Antimonoxid in einem Verhältnis von zwischen 0,2 und 5 Gewichtsprozent,
- Kupferoxid in einem Verhältnis von zwischen 0,1 und 5 Gewichtsprozent,
- Zinkoxid in einem Verhältnis von zwischen 0,5 und 5 Gewichtsprozent,
- ein Entflockungsmittel der Methacrylatfamilie in einem Verhältnis von zwischen 0 und 5 Gewichtsprozent,
- einen Weichmacher oder eine Mischung von Weichmachern aus der Zellulosefamilie und/oder aus acrylbasierten Polymeren, und
- eine Base, um den pH der Mischung einzustellen.

2. Keramische Zusammensetzung nach Anspruch 1, wobei das Zinnoxid in einem Verhältnis von zwischen 95 und 99 Gewichtsprozent vorhanden ist.

3. Keramische Zusammensetzung nach Anspruch 1, wobei das Antimonoxid in einem Verhältnis von zwischen 0,2 und 1,2 Gewichtsprozent vorhanden ist.

4. Keramische Zusammensetzung nach Anspruch 1, wobei das Kupferoxid in einem Verhältnis von zwischen 0,1 und 1 Gewichtsprozent vorhanden ist.

5. Keramische Zusammensetzung nach Anspruch 1, wobei das Zinkoxid in einem Verhältnis von zwischen 0,5 und 1,5 Gewichtsprozent vorhanden ist.

6. Keramische Zusammensetzung nach Anspruch 1, wobei das Entflockungsmittel in einem Verhältnis von zwischen 0,5 und 1,5% vorhanden ist.

7. Verfahren zur Herstellung einer keramischen Elektrode unter Verwendung einer keramischen Zusammensetzung gemäß einem der vorhergehenden Ansprüche, **dadurch gekennzeichnet, dass** es die folgenden Schritte aufweist:
- Schritt zum Vermischen (3) des Rohmaterials (1) miteinander und mit Wasser (2),
- Formgebungsschritt (4) durch Extrudieren und/oder Pressen und Pressen und Erzielen von Elektroden in verschiedenen Gestalten,
- Schritt zum Trocknen (5) der Teile,
- Schritt zum Sintern (7) bei Temperaturen von zwischen 1200 und 1500°C und
- thermischer Behandlungsschritt (8) in einer reduzierenden Atmosphäre bei Temperaturen von zwischen 200 und 1100°C, welcher nach dem Schritt zum Sintern (7) durchgeführt wird.

8. Verfahren zur Herstellung einer keramischen Elektrode nach Anspruch 7, wobei das im Formgebungsschritt (7) durchgeführte Pressen einachsig ist.

9. Verfahren zur Herstellung einer keramischen Elektrode nach Anspruch 7, **dadurch gekennzeichnet, dass** die reduzierende Atmosphäre im thermischen Behandlungsschritt (8) Kohlenmonoxid im Verhältnis von zwischen 0 und 40% und Stickstoff im Verhältnis von zwischen 100 und 65% aufweist.

10. Verfahren zur Herstellung einer keramischen Elektrode nach Anspruch 7, **dadurch gekennzeichnet, dass** es einen Schritt zur mechanischen Bearbeitung (6a, 6b) der erzielten Elektroden aufweist.

11. Verfahren zur Herstellung einer keramischen Elektrode nach Anspruch 10, wobei der Schritt zur mechanischen Bearbeitung (6a) der Elektroden in einem ungebrannten Zustand zwischen dem Schritt zum Trocknen (5) und dem Schritt zum Sintern (7) durchgeführt wird.

12. Verfahren zur Herstellung einer keramischen Elektrode nach den Ansprüchen 7 und 10, wobei der Schritt zur mechanischen Bearbeitung (6b) der Elektroden im gebrannten Zustand als letzter Schritt nach dem thermischen Behandlungsschritt (8) durchgeführt wird.

13. Keramische Elektrode, welche durch das Verfahren nach den Ansprüchen 7 bis 12 hergestellt ist.

14. Verwendung einer keramischen Elektrode nach Anspruch 13 für einen Einsatz, welcher aus der Gruppe ausgewählt ist, die aus Folgendem gebildet wird: Elektro-Chlorierung von Wasser, kathodischer Schutz von Bewehrungsstäben in Stahlbeton, elektro-osmotischer Schutz gegen Dampf, Konservierung von Lebensmitteln mittels gepulster, elektrischer Felder hoher Intensität, Behandlung und Reinigung von Schmutzwasser oder von für den menschlichen Verbrauch vorgesehenem Wasser.

## Revendications

1. Composition céramique **caractérisée en ce qu**'elle comprend :
- de l'oxyde d'étain dans une proportion comprise entre 85 % et 99 % en poids,
- de l'oxyde d'antimoine dans une proportion comprise entre 0,2 % et 5 % en poids,
- de l'oxyde de cuivre dans une proportion comprise entre 0,1 % et 5 % en poids,
- de l'oxyde de zinc dans une proportion comprise entre 0,5 % et 5 % en poids,
- un défloculant de la famille des méthacrylates, dans une proportion comprise entre 0 % et 5 %,
- un plastifiant ou un mélange de plastifiants de la famille des celluloses et/ou de polymères à base d'acrylique et
- une base pour ajuter le pH du mélange.

2. Composition céramique selon la Revendication 1 **dans laquelle** l'oxyde d'étain est présent dans une proportion comprise entre 95 % et 99 % en poids.

3. Composition céramique selon la Revendication 1 **dans laquelle** l'oxyde d'antimoine est présent dans une proportion comprise entre 0,2 % et 1,2 % en poids.

4. Composition céramique selon la Revendication 1 **dans laquelle** l'oxyde de cuivre est présent dans une proportion comprise entre 0,1 % et 1 % en poids.

5. Composition céramique selon la Revendication 1 **dans laquelle** l'oxyde de zinc est présent dans une proportion comprise entre 0,5 % et 1,5 % en poids.

6. Composition céramique selon la Revendication 1 **dans laquelle** le défloculant est présent dans une proportion comprise entre 0,5 % et 1,5 % en poids.

7. Procédé de fabrication d'une électrode céramique
ayant recours à une composition céramique telle que celle définie dans les Revendications précédentes, **caractérisée en ce qu**'il comprend les étapes suivantes :
- étape de mélange (3) des matières brutes (1) les unes avec les autres et avec de l'eau (2),
- étape de façonnage (4) par extrusion et/ou pressage et pressage et obtention d'électrodes de différentes formes,
- étape de séchage (5) des pièces,
- étape de frittage (7) à des températures comprises entre 1 200 et 1 500°C et
- étape de traitement thermique (8) dans une atmosphère réductrice à des températures comprises entre 500 et 1 100 °C, réalisée après l'étape de frittage (7).

8. Procédé de fabrication d'une électrode céramique selon la Revendication 7 **dans lequel** le pressage effectué à l'étape de façonnage (4) est du type uniaxial.

9. Procédé de fabrication d'une électrode céramique selon la Revendication 7 **dans lequel** l'atmosphère réductrice de l'étape de traitement thermique (8) comprend du monoxyde de carbone dans une proportion comprise entre 0 et 40 % et de l'azote dans une proportion comprise entre 100% et 60 %.

10. Procédé de fabrication d'une électrode céramique selon la Revendication 7 **caractérisé en ce qu'il** comprend une étape d'usinage (6a, 6b) des électrodes obtenues.

11. Procédé de fabrication d'une électrode céramique selon la Revendication 10 **dans lequel** l'étape d'usinage (6a) des électrodes est réalisée dans un état non soumis à une flamme, entre l'étape de séchage (5) et l'étape de frittage (7).

12. Procédé de fabrication d'une électrode céramique selon les Revendications 7 et 10 **dans lequel** l'étape d'usinage (6b) des électrodes est réalisée dans un état soumis à une flamme, en tant qu'étape finale, après l'étape de traitement thermique (8).

13. Électrode céramique fabriquée selon le procédé décrit dans les Revendications 7 à 12.

14. Utilisation d'une électrode céramique selon la Revendication 13 pour une application sélectionnée parmi le groupe formé par : électro-chloration de l'eau, protection cathodique des barres d'armature pour béton anné, protection électro-osmotique contre l'humidité.
conservation d'aliments au moyen de champs électriques pulsés de haute intensité, traitement et purification des eaux usées ou de l'eau destinée à la consommation humaine.
